# NEUE EUROPÄISCHE PATENTSCHRIFT

(11) **EP 3 400 786 B2**
(45) Veröffentlichungstag und Bekanntmachung des Hinweises auf die Entscheidung über den Einspruch: **21.09.2022**
(45) Hinweis auf die Patenterteilung: 04.12.2019
(21) Anmeldenummer: 18152445.5
(22) Anmeldetag: 19.01.2018
(51) Int. Cl.: A01F 15/08

(54) **BALLENPRESSE**
BALING PRESS
PRESSE À BALLES

(30) Priorität: 08.05.2017 DE 102017109782
(43) Veröffentlichungstag der Anmeldung: 14.11.2018
(73) Patentinhaber: Usines CLAAS France S.A.S, 57140 St. Rémy / Woippy (FR)
(72) Erfinder: Cazaban-Mazerolles, Benoit, 57070 Chieulles (FR); Waechter, Julien, 57070 Saint- Julien- Ies- Metz (FR)
(74) Vertreter: CLAAS Gruppe

(56) Entgegenhaltungen:
- EP-A1- 2 929 776
- EP-A1- 3 320 769
- DE-A1-102016 222 081
- US-A- 2 685 804

## Beschreibung

Die Erfindung betrifft eine landwirtschaftliche Ballenpresse gemäß dem Oberbegriff des Anspruches 1.

Ballenpressen werden in der Landwirtschaft dazu eingesetzt beispielsweise im Schwad abgelegtes halmartiges Erntegut wie Stroh, Heu, Gras oder dergleichen aufzunehmen und zu Ballen zu pressen. Hierzu verfügen Ballenpressen über verschiedene Arbeitsaggregate, die der erforderlichen Förderung und/oder Verarbeitung des Ernteguts dienen. Die Arbeitsaggregate stehen üblicherweise mit einem zentralen Antriebsstrang der Ballenpresse in Antriebsverbindung.

Eine derartige landwirtschaftliche Ballenpresse ist in Form einer Quaderballenpresse beispielsweise aus der EP 0 819 375 A1 bekannt, welche eine zumindest einen Schneidrotor, einen Raffer und einen Presskolben aufweist, welche über einen zentralen Antriebsstrang antreibbar sind. Die Ballenpresse wird von einem Traktor gezogen und ist antriebsstrangseitig mit einer Zapfwelle des Traktors zum Antrieb der Ballenpresse verbunden. Der Antriebsstrang der Quaderballenpressen weist dabei einen Presskolbenantrieb auf. Dabei dient üblicherweise eine Kurbelwelle mit entsprechend angelenkter Pleuelstangenanordnung dazu, eine über Antriebswellen und beispielsweise einem Getriebe auf die Kurbelwelle übertragene Rotationsbewegung in eine translatorische Pendelbewegung des Presskolbens umzuformen. Die im Pressbetrieb ständig erfolgende Pendelbewegung des Presskolbens, der zur Erzielung einer gewünschten Wucht beim Auftreffen auf das Erntegut eine nicht unerhebliche Masse aufweisen muss, steht dabei in Wechselwirkung mit dem zugeordneten Antriebsstrang, so dass die periodischen Kolbenhübe eine ebenfalls periodische Rückwirkung auf den gesamten vorgelagerten Antriebsstrang ausüben. Zum Schutz zumindest einiger Komponenten des Antriebsstrangs, insbesondere zum Schutz des Zapfwellenantriebsstrangs des Traktors vor periodischen Lastspitzen ist dem Antriebsstrang von Quaderballenpressen daher ein Energiespeicher üblicherweise in Form eines Schwungrades zugeordnet. Dessen bewusst hoch gewähltes Trägheitsmoment sorgt dafür, dass die durch den Presskolbenantrieb bedingten periodischen Laststöße weitestgehend abgefangen werden können. In heutigen Quaderballenpressen verwendete Schwungräder weisen dazu beispielsweise Massen von einigen hundert Kilogramm mit einem entsprechend hohen Trägheitsmoment auf.

Landwirtschaftliche Ballenpressen mit Schwungrad sind beispielsweise aus der US2685804 oder der EP2929776A1 bekannt. Die in der EP 2 929 776 A1 offenbarte Presse bietet zusätzlich die Möglichkeit, kinetische Energie beispielsweise eines Antriebsstranges zumindest teilweise zu wandeln und in einem Energiespeicher abrufbar zu speichern.

Das hohe Trägheitsmoment des Antriebsstranges der Ballenpresse hat jedoch den Nachteil, dass bei einem Anfahren der Ballenpresse ein verhältnismäßig hoher mechanischer Aufwand für die Beschleunigung erforderlich ist. Da der antreibende Traktor den Antriebsstrang nur langsam in Bewegung versetzen kann, zieht sich der Startvorgang durchaus über einen längeren Zeitraum hin und erfordert dabei eine hohe Antriebsleistung. Zudem kann während des Betriebs der Ballenpresse ein Abbremsen, ein Wiederbeschleunigen oder gar ein Neustart erforderlich sein, beispielsweise im Überlastungsfall einzelner Arbeits- und/oder Förderaggregate oder sonstigen Arbeitsunterbrechungen, was jeweils zu einer hohen Belastung des Antriebsstranges und des Antriebmotors des Zugfahrzeuges führt.

Es ist daher eine Aufgabe der vorliegenden Erfindung, eine landwirtschaftliche Ballenpresse bereitzustellen, welche eine Reduzierung der Belastung des Antriebsstranges und ein verbessertes Betreiben der Ballenpresse ermöglicht.

Die Lösung der Aufgabe erfolgt erfindungsgemäß durch die kennzeichnenden Merkmale des Anspruches 1. Vorteilhafte Ausgestaltungen der Erfindung sind in den Unteransprüchen angegeben.

Die Aufgabe wird gelöst durch eine landwirtschaftliche Ballenpresse, insbesondere Quaderballenpresse, mit zumindest einem Arbeitsaggregat zur Verarbeitung und/oder Förderung von Erntegut, und einem Antriebsstrang zum Antrieb des mindestens einen Arbeitsaggregates, wobei dem Antriebsstrang mindestens ein Energiespeicher zugeordnet ist. Gemäß der Erfindung weist der Energiespeicher ein veränderbares Trägheitsmoment auf.

Das Trägheitsmoment des mindestens einen Energiespeichers ist während des Betriebs und/oder im Stillstand der Ballenpresse variierbar, also veränderbar. Hierdurch kann das Trägheitsmoment des Energiespeichers beispielsweise im Stillstand und/oder bei einer niedrigen Drehzahl des Antriebsstranges geringer sein, als bei einer hohen Drehzahl. Dies hat den Vorteil, dass bei einem Anfahren und/oder Beschleunigen der Ballenpresse aufgrund des niedrigeren Trägheitsmoments ein geringeres Drehmoment und damit eine verringerte Antriebsleistung benötigt wird, als bei einem Antriebsstrang mit unveränderbarem, höheren Trägheitsmoment. Dies hat weiterhin den Vorteil, dass eine Belastung des Antriebsstranges während eines Beschleunigens und/oder Anfahrens des Antriebsstranges reduziert werden kann. Zudem können Drehmomentschwankungen durch ein entsprechendes Variieren des Trägheitsmomentes während des Betriebs der Ballenpresse ausgeglichen werden, wodurch ein Betrieb der Ballenpresse verbessert werden kann.

In einer bevorzugten Ausgestaltung der Erfindung weist der Energiespeicher mindestens ein verlagerbares Masseelement auf, dessen Schwerpunkt zur Veränderung des Trägheitsmomentes des Energiespeichers zumindest in radialer Richtung verlagerbar ist. Das Trägheitsmoment eines Energiespeichers hängt u.a. von der Massenverteilung in Bezug auf beispielsweise eine Drehachse ab. Je weiter ein Masseelement dabei von der Drehachse in radialer Richtung entfernt ist, desto mehr trägt es zum Trägheitsmoment bei und so größer wird das Trägheitsmoment. Dadurch kann durch eine Verlagerung des Masseelementes eine Veränderung des Trägheitsmomentes ermöglicht werden.

Dabei ist durch eine Verlagerung in radialer Richtung beispielsweise zu einer Drehachse hin, das Trägheitsmoment des Energiespeichers verkleinerbar und durch eine Verlagerung weg davon vergrößerbar.

In einer bevorzugten Ausgestaltung der Erfindung ist das Masseelement translatorisch und/oder rotatorisch verlagerbar an dem Energiespeicher angeordnet. Eine translatorische Verlagerung eines Masseelementes kann beispielsweise in radialer und/oder tangentialer Richtung beispielsweise zu einer Drehachse des Energiespeichers erfolgen. Eine rotatorische Verlagerung kann beispielsweise durch ein Verschwenken des Masseelementes um eine Schwenkachse erfolgen. Durch eine translatorische und/oder rotatorische Verlagerung des Masseelementes relativ zu dem Energiespeicher kann eine konstruktiv günstige Verlagerung des Massenschwerpunktes des Masselelementes gewählt werden.

Femer ist bevorzugt vorgesehen, dass das Masseelement in eine Starposition und/oder eine Betriebsposition verbringbar ist. Eine Startposition kann dabei eine Position des Masseelementes sein, in der das Trägheitsmoment des Energiespeichers ein Minimum aufweist. In einer Betriebsposition des Masseelementes kann das Trägheitsmoment des Energiespeichers einen größeren Wert als in der Startposition und/oder ein Maximum aufweisen. Durch eine definierte Startposition des mindestens einen Masseelementes kann ein energieeffizientes Anfahren der Ballenpresse ermöglicht werden.

Erfindungsgemäß ist das Masseelement, beispielsweise mittels eines Aktors, aktiv verstellbar ausgebildet. Eine aktive Verstellung des Masseelementes, beispielsweise mittels eines elektrisch und/oder hydraulisch antreibbaren Aktors hat den Vorteil, dass eine genaue Steuerung des Trägheitsmomentes des Energiespeichers ermöglicht wird. Vorteilhafterweise ist das Masseelement zusätzlich zu der aktiven Verstellung selbstverstellend ausgebildet. Ein selbstverstellendes Masseelement kann in Abhängigkeit der Fliehkraft, insbesondere automatisch, verstellbar sein. Hierbei kann das Masseelement fliehkraftbedingt von der Startposition in eine Betriebsposition verlagert werden. Dies hat den Vorteil, dass keine weitere Steuerung oder Regelung notwendig ist, und das Masseelement beispielsweise bei einem Anhalten der Ballenpresse und oder des Energiespeichers selbsttätig in die Startposition zurückkehrt.

In einer bevorzugten Ausgestaltung der Erfindung ist dem Masseelement mindestens ein elastisch verformbareres Element zugeordnet. Das Masseelement ist durch das mindestens eine elastische Element, insbesondere bei einem Stillstand der Ballenpresse und/oder des Energiespeichers, verlagerbar, insbesondere in eine Startposition oder Betriebsposition. Ein elastisches Element kann in Form einer Feder, beispielsweise Zug- oder Druckfeder, und/oder eines Kunststoffelementes ausgebildet sein. Bei einer Verlagerung des Masseelementes kann das elastische Element verformt werden, wodurch beispielsweise eine konstruktiv einfache Rückstellung des Masseelementes in die Startposition bewirkt werden kann.

In einer besonders bevorzugten Ausgestaltung der Erfindung ist dem Masseelement mindestens eine Führungsvorrichtung zur Führung der Verlagerung des Masseelementes zugeordnet. Die Führungsvorrichtung kann in Form einer Profilierung, Führungsflächen und/oder eines Anschlags ausgebildet sein. Dies hat den Vorteil, dass unkontrollierte Bewegungen des Masseelementes vermieden werden können oder auch definierte Positionen, beispielsweise die Startposition, bestimmt werden können.

In einer besonders bevorzugten Ausgestaltung der Erfindung ist der mindestens eine Energiespeicher in Form eines Schwungrades ausgebildet, welches um eine Drehachse drehbar gelagert ist. Ein Schwungrad stellt dabei einen konstruktiv einfachen und robusten Energiespeicher dar, dessen Trägheitsmoment durch verlagerbare Masseelemente auf einfache Weise veränderbar ist. Zudem ist das Masseelement vorteilhafterweise, insbesondere teilweise, innerhalb oder auf einer Oberfläche des Energiespeichers angeordnet, wodurch eine bauraumsparende Anordnung des mindestens einen Masseelementes an dem Schwungrad ermöglicht wird.

In einer besonders bevorzugten Ausgestaltung der Erfindung ist eine Steuervorrichtung zum, insbesondere automatischen, Verlagern des mindestens einen Masseelementes vorgesehen. Durch die Steuervorrichtung können ein oder mehrere Masseelemente, insbesondere einzeln oder gemeinsam, aktiv verstellt werden, beispielsweise durch eine entsprechende Ansteuerung von einem den jeweiligen Masseelementen zugeordneten Aktor oder Aktoren. Dies ermöglicht neben einem automatischen Anfahren einer Startposition von Masseelementen eine vorausschauende Änderung des Trägheitsmomentes des Energiespeichers im Betrieb der Ballenpresse. So kann beispielsweise eine Drehzahl des Schwungrades durch eine Verlagerung von Masseelementen verändert werden. Zudem hat eine einzelne Verlagerung von Masselementen den Vorteil, dass hierdurch ein Schwungrad ausgewichtet werden kann, wodurch beispielsweise Belastungen auf dessen Lagerung verringert und die Lebensdauer erhöht werden können.

Es zeigt:
- Fig. 1:: eine Kombination aus einem Traktor und einer Ballenpresse in schematischer Seitenansicht;
- Fig. 2a,b:: eine schematische Detailansicht eines ersten Schwungrades in einer Startposition und einer Betriebsposition; und
- Fig. 3a,b:: eine schematische Detailansicht eines zweiten Schwungrades in einer Startposition und einer Betriebsposition.

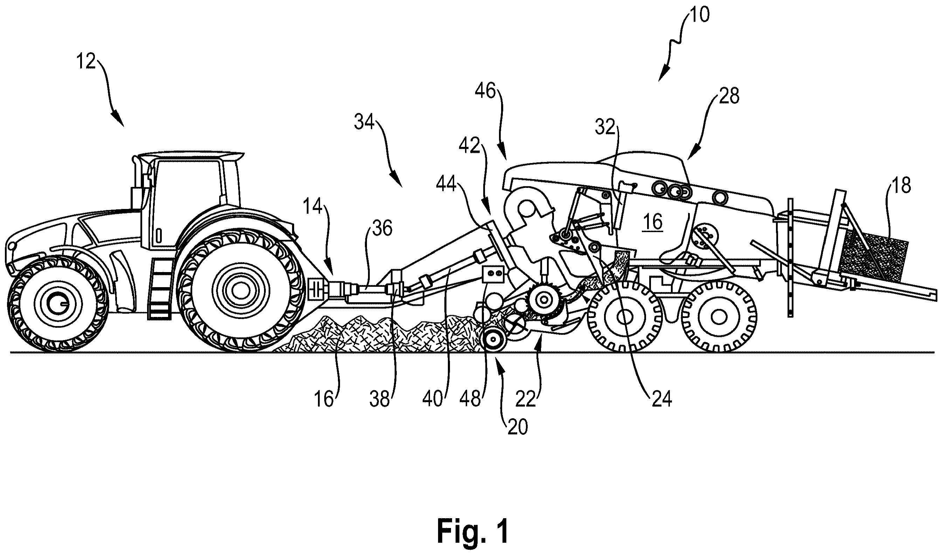

Figur 1 zeigt in einer schematischen Seitenansicht eine Kombination aus einer landwirtschaftlichen Ballenpresse 10 in Form einer Quaderballenpresse und einem Traktor 12, wobei die Ballenpresse 10 von dem Traktor 12 über ein Feld gezogen wird. Der Traktor 12 weist heckseitig einen an sich bekannten Zapfwellenabtrieb 14 auf, über den die Ballenpresse 10 mit mechanischer Antriebsenergie versorgt werden kann. Zur Verarbeitung von Erntegut 16 zu Quaderballen 18 weist die Ballenpresse 10 Arbeitsaggregate wie eine Pickup 20, einen Schneidrotor 22, einen Raffer 24, einen Presskolben 26 und eine Knotereinrichtung 28 auf, durch welche das Erntegut 16 gefördert und/oder bearbeitet wird. Dabei dient die Pickup 20 dazu, auf dem Feldboden - zumeist in Form eines sogenannten Schwads - liegendes Erntegut 16 aufzunehmen und dieses den nachgelagerten Förder- und/oder Verarbeitungsaggregaten zuzuführen.

Das so aufgenommene Erntegut 16 erreicht nach Verlassen der Pickup 20 den Schneidrotor 22, welcher eine weitere Zerkleinerung des Emteguts 16 bewirkt. Anschließend gelangt das Erntegut 16 in einen Zuführkanal, in welchem ein Raffer 24 durch periodische Füll- und Sammelhubbewegungen eine Vorverdichtung des Erntegutes 16 und eine Förderung des Ernteguts 16 in die Presskammer 30 durchführt. In der Presskammer 30 ist ein Presskolben 32 translatorisch beweglich gelagert, welcher über einen Presskolbenantrieb in oszillierende Bewegungen versetzt wird. Fertig gepresste Quaderballen 18 werden heckseitig aus der Ballenpresse 10 auf das Feld abgeworfen.

Die Arbeitsaggregate der Ballenpresse 10, insbesondere die Pickup 20, der Schneidrotor 22, der Raffer 24, der Presskolben 32 sowie die oberhalb der Presskammer 30 angeordnete Knotereinrichtung 28, werden über einen zentralen Antriebsstrang 34 der Ballenpresse 10 angetrieben. Dieser Antriebsstrang 34 umfasst im Wesentlichen eine Welle 36, die mit der Zapfwelle 14 Traktors 12 in Antriebsverbindung steht, ein Eingangsgetriebe 38, eine Gelenkwelle 40, ein Energiespeicher 42 in Form eines Schwungrades 44 und ein Hauptgetriebe 46. Eine vom Traktor 12 über die Zapfwelle 14 bereitgestellte Antriebsleistung wird somit über den Antriebsstrang 34 zum Hauptgetriebe 46 übertragen, um von dort aus an einzelne Arbeitsaggregate wie Pickup 20, Schneidrotor 22, Raffer 24, Presskolben 32 und Knotereinrichtung 28 der Ballenpresse 10 verteilt zu werden.

Die Ballenpresse 10 weist einen Energiespeicher 42 mit einem variablen Trägheitsmoment auf. Der Antriebsstrang 34 weist durch den zwischen der Gelenkwelle 40 und dem Hauptgetriebe 46 angeordnete Energiespeicher 42 in Form des Schwungrades 44 ein gezielt erhöhtes Trägheitsmoment auf. Dieses hat den Vorteil, dass die traktorseitige Zapfwelle 14 vor periodischen Lastspitzen geschützt wird, welche sich insbesondere aus Wechselwirkungen durch den Antrieb des Presskolbens 32 ergeben. Aufgrund des erhöhten Trägheitsmomentes wird bei einem Anfahren der Ballenpresse 10 ein höherer mechanischer Aufwand zur Beschleunigung des Antriebsstrangs 34 benötigt.

Da der antreibende Traktor 12 den Antriebsstrang 34 - mitsamt davon angetriebenen Arbeitsaggregaten 20, 22, 24, 26, 28 - nur langsam in Bewegung versetzen kann, zieht sich der Startvorgang durchaus über einen nicht unerheblichen Zeitraum hin und erfordert dabei viel Energie. Bei einem erfindungsgemäßen Energiespeicher 42, besonders in Form eines Schwungrades 44, kann das variable Trägheitsmoment während des Startvorganges reduziert werden, wodurch ein Anfahren der Ballenpresse 10 zügiger erfolgen kann. Das Trägheitsmoment kann dann beispielsweise bei ab einer vorgegebenen Drehzahl des Antriebsstranges 34 und/oder des Schwungrades 44, insbesondere auf ein Maximum, erhöht werden.

Während des Betriebs der Ballenpresse 10 kann ein Abbremsen und/oder Beschleunigen des Antriebsstrangs 34 erforderlich sein, beispielsweise im Überlastungsfall eines Arbeitsaggregates 20, 22, 24, 26, 28 wie einer Blockierungen durch Erntegut oder ganz allgemein bei Arbeitsunterbrechungen. Nach einem Abbremsen des Antriebsstranges 34 und/oder des Schwungrades 44 kann beispielsweise durch ein Absenken des Trägheitsmomentes zunächst die Drehzahl des Antriebsstranges 34 und/oder des Schwungrades 44 angehoben werden, und anschließend das Trägheitsmoment erhöht werden. Durch eine insbesondere automatische Reglung mittels einer traktor- und/oder pressenseitigen Steuervorrichtung 48 können auch Drehzahlschwankungen durch eine Veränderung des Trägheitsmomentes ausgeglichen werden. Ein Energiespeicher 42 mit variablem Trägheitsmoment in Form eines Schwungrades 44 kann beispielsweise zusätzlich zu einem bestehenden Schwungrad eingerüstet werden.

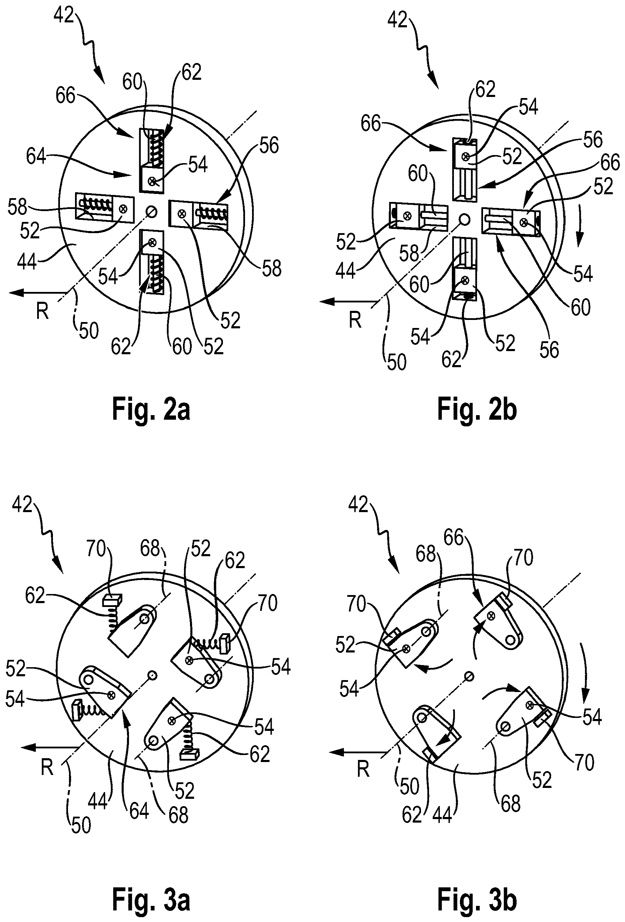

In den Fig. 2 und 3 sind verschiedenen Ausführungsbeispielen Möglichkeiten gezeigt, wie ein Energiespeicher 42 mit variablem Trägheitsmoment ausgebildet sein kann. Der Energiespeicher 42 ist dabei jeweils in Form eines Schwungrades 44 ausgebildet, welches um eine Drehachse 50 drehbar gelagert ist. Das Schwungrad 44 weist dabei mehrere Masseelemente 52 auf, deren Schwerpunkte 54 senkrecht zur Drehachse 50 in radialer Richtung R verlagerbar ausgestaltet sind. Die Masseelemente 52 sind dabei innerhalb des Schwungrades 44, insbesondere oberflächenbündig, innerhalb von Aufnahmeöffnungen 56 angeordnet.

Die Masseelemente 52 weisen eine im Wesentlichen quaderförmige Form auf und werden durch erste Führungsvorrichtungen 58 in Form von Seitenflächen der Aufnahmeöffnungen 56 geführt und an einer Drehbewegung gehindert. Weiterhin sind die Masseelemente 52 an einer zweiten Führungsvorrichtung 60 in Form eines Stabes angeordnet und werden in radialer Richtung R durch diesen geführt. Radial außenseitig und/oder innenseitig ist an dem Masseelemente 52 ein elastisches Element 62 in Form einer Feder angeordnet, welche gegenüber dem Schwungrad 44, insbesondere innerhalb der Aufnahmeöffnung 56, abgestützt ist.

In Fig. 2a ist das Schwungrad 44 mit einem verringerten Trägheitsmoment dargestellt, wobei die Masseelemente 52 jeweils in einer Startposition 64, radial innen, dargestellt sind. Bei einem Anfahren der Ballenpresse 10 und einer zunehmenden Drehzahl des Schwungrades 44 werden die Masselelemente 52 gegen die elastischen Elemente 62 nach radial außen verlagert, wodurch das Trägheitsmoment des Schwungrades erhöht wird. Die Verlagerung der Masseelemente 52 erfolgt dabei translatorisch in radialer Richtung R. Ein maximales Trägheitsmoment des Schwungrades 44 ist erreicht (Fig. 2b), wenn die Masseelemente 52 ihre jeweilige radial außenseitige Betriebsposition 66 erreicht haben.

Bei einem Anhalten der Ballenpresse 10 und dem Schwungrad 44 können die Masseelemente 52 durch die elastischen Elemente 62 wieder in die Startposition 64 zurück verbracht werden. Erfindungsgemäß erfolgt eine Verlagerung des Masseelementes 52 aktiv, beispielsweise mittels eines Aktors (nicht dargestellt), insbesondere drehzahlunabhängig. So kann die zweite Führungsvorrichtung 60 beispielsweise in Form eines Spindeltriebes ausgebildet sein, wodurch beispielsweise eine drehzahlunabhängige Verlagerung des Masseelementes 52 ermöglicht werden kann. Der Aktor kann dabei durch die Steuervorrichtung 48 gesteuert werden.

In Fig. 3a und 3b sind die Masseelementen 52 jeweils um eine Schwenkachse 68 schwenkbar gelagert. Hierdurch ist der Schwerpunkt 54 eines Masseelementes 52 translatorisch und/oder rotatorisch in radialer Richtung R in eine Startposition und/oder eine Betriebsposition 66 verlagerbar. Die Schenkachsen 68 sind parallel zu der Drehachse 50 des Schwungrades 44 angeordnet. Die Masseelemente 52 sind auf einer Oberfläche des Schwungrades 44 angeordnet. Durch eine dritte Führungsvorrichtung 70 in Form eines Anschlags wird eine Schwenkbewegung eines Masseelementes 52 in der Betriebsposition 66 begrenzt (Fig. 3b). Zwischen dem Masseelement 52 und der dritten Führungsvorrichtung 70 ist dabei jeweils ein elastisches Element 62, beispielsweise in Form eines Zug- oder Druckfeder, angeordnet, welches bei einer Verlagerung des Masseelementes 52 von der Startposition 64 in die Betriebsposition 66 komprimiert wird. Durch das elastische Element 62 ist das Masseelement 52 bei einem Stillstand oder einer geringen Drehzahl des Schwungrades wieder in die Startposition überführbar.

Die Masseelemente 52 können einen inhomogenen Aufbau aufweisen, wobei der Schwerpunkt 54 außerhalb eines Flächenschwerpunktes des Masseelementes 52 angeordnet ist. Das Masseelemente 52 kann dabei beispielsweise pendelförmig ausgebildet und um eine Schwenkachse verlagerbar sein.

### Bezugszeichenliste

- 10: Ballenpresse
- 12: Traktor
- 14: Zapfwellen_antrieb/_abtrieb
- 16: Erntegut
- 18: Quaderballen
- 20: Pickup
- 22: Schneidrotor
- 24: Raffer
- 26: Presskolben
- 28: Knoterreinigung
- 30: Presskammer
- 32: Presskolben
- 34: Antriebsstrang
- 36: Welle
- 38: Eingangsgetriebe
- 40: Gelenkwelle
- 42: Energiespeicher
- 44: Schwungrad
- 46: Hauptgetriebe
- 48: Steuervorrichtung
- 50: Drehachse
- 52: Masseelemente
- 54: Schwerpunkt
- 56: Aufnahmeöffnung
- 58: erste Führungsvorrichtung
- 60: zweite Führungsvorrichtung
- 62: elastisches Elemente
- 64: Startposition
- 66: Betriebsposition
- 68: Schwenkachse
- 70: dritte Führungsvorrichtung
- R: radiale Richtung

## Patentansprüche

1. Landwirtschaftliche Ballenpresse, insbesondere Quaderballenpresse, mit zumindest einem Arbeitsaggregat (20, 22, 24, 26, 28) zur Verarbeitung und/oder Förderung von Erntegut (16), und einem Antriebsstrang (34) zum Antrieb des mindestens einen Arbeitsaggregates (20, 22, 24, 26, 28), wobei dem Antriebsstrang (34) mindestens ein Energiespeicher (42) zugeordnet ist, **dadurch gekennzeichnet, dass** der Energiespeicher (42) ein variables Trägheitsmoment aufweist, wobei der Energiespeicher (42) mindestens ein verlagerbares Masseelement (52) aufweist, dessen Schwerpunkt (54) zur Veränderung des Trägheitsmomentes des Energiespeichers (42) zumindest in radialer Richtung (R) verlagerbar ist, wobei das Masseelement (52), beispielswiese mittels eines Aktors, aktiv verstellbar ausgebildet ist.

2. Ballenpresse nach Anspruch 1, **dadurch gekennzeichnet, dass** das Masseelement (52) translatorisch und/oder rotatorisch verlagerbar an dem Energiespeicher (42) angeordnet ist.

3. Ballenpresse nach einem der vorherigen Ansprüche, **dadurch gekennzeichnet, dass** das Masseelement (52) in eine Startposition (64) und/oder eine Betriebsposition (66) verbringbar ist.

4. Ballenpresse nach einem der vorherigen Ansprüche, **dadurch gekennzeichnet, dass** das Masseelement (52) selbstverstellend ausgebildet ist.

5. Ballenpresse nach einem der vorherigen Ansprüche, **dadurch gekennzeichnet, dass** dem Masseelement (52) mindestens ein elastisch verformbareres Element (62) zugeordnet ist.

6. Ballenpresse nach einem der vorherigen Ansprüche, **dadurch gekennzeichnet, dass** dem Masseelement (52) mindestens eine Führungsvorrichtung (58, 60, 70) zur Führung der Verlagerung des Masseelementes (52) zugeordnet ist.

7. Ballenpresse nach einem der vorherigen Ansprüche, **dadurch gekennzeichnet, dass** der mindestens eine Energiespeicher (42) in Form eines Schwungrades (44) ausgebildet ist, welches um eine Drehachse (50) drehbar gelagert ist.

8. Ballenpresse nach einem der vorherigen Ansprüche, **dadurch gekennzeichnet, dass** das Masseelement (52), insbesondere teilweise, innerhalb oder auf einer Oberfläche des Energiespeichers (42) angeordnet ist.

9. Ballenpresse nach einem der vorherigen Ansprüche, **dadurch gekennzeichnet, dass** eine Steuervorrichtung (48) zum, insbesondere automatischen, Verlagern des mindestens einen Masseelementes (52) vorgesehen ist.

## Claims

1. An agricultural baler, in particular a square baler, with at least one working assembly (20, 22, 24, 26, 28) for processing and/or conveying crop (16), and a drive train (34) for driving the at least one working assembly (20, 22, 24, 26, 28), wherein at least one energy storage device (42) is associated with the drive train (34), **characterized in that** the energy storage device (42) has a variable moment of inertia, wherein the energy storage device (42) has at least one displaceable mass element (52), the centre of mass (54) of which can be displaced in order to vary the moment of inertia of the energy storage device (42) in at least the radial direction (R), wherein the mass element (52) is configured such as to be actively displaceable, for example by means of an actuator.

2. The baler according to claim 1, **characterized in that** the mass element (52) is disposed on the energy storage device (42) such as to be displaceable in translation and/or rotation.

3. The baler according to one of the preceding claims, **characterized in that** the mass element (52) can be brought into a start position (64) and/or an operating position (66).

4. The baler according to one of the preceding claims, **characterized in that** the mass element (52) is configured such as to be self-adjusting.

5. The baler according to one of the preceding claims, **characterized in that** at least one elastically deformable element (62) is associated with the mass element (52).

6. The baler according to one of the preceding claims, **characterized in that** at least one guiding device (58, 60, 70) for guiding the displacement of the mass element (52) is associated with the mass element (52).

7. The baler according to one of the preceding claims, **characterized in that** the at least one energy storage device (42) is configured in the form of a flywheel (44) which is pivotably mounted about a rotational axis (50).

8. The baler according to one of the preceding claims, **characterized in that** the mass element (52), in particular part thereof, is disposed inside or on a surface of the energy storage device (42).

9. The baler according to one of the preceding claims, **characterized in that** a control device (48) is provided for displacement, in particular automatic displacement, of the at least one mass element (52).

## Revendications

1. Presse à balles agricole, en particulier, presse à balles parallélépipédiques, comprenant au moins un organe de travail (20, 22, 24, 26, 28) pour traiter et/ou convoyer du produit récolté (16) et comprenant une chaîne de transmission (34) pour entraîner le au moins un organe de travail (20, 22, 24, 26, 28), à la chaîne de transmission (34) étant associé au moins un accumulateur d'énergie (42), **caractérisée en ce que** l'accumulateur d'énergie (42) présente un moment d'inertie variable, l'accumulateur d'énergie (42) comportant au moins un élément de masse déplaçable (52) dont le centre de gravité (54) est déplaçable au moins dans la direction radiale (R) pour modifier le moment d'inertie de l'accumulateur d'énergie (42), l'élément de masse (52) étant conçu avec une régulation active, par exemple au moyen d'un actionneur.

2. Presse à balles selon la revendication 1, **caractérisée en ce que** l'élément de masse (52) est disposé sur l'accumulateur d'énergie (42) avec une possibilité de déplacement en translation et/ou en rotation.

3. Presse à balles selon une des revendications précédentes, **caractérisée en ce que** l'élément de masse (52) peut être amené dans une position de départ (64) et/ou dans une position de fonctionnement (66).

4. Presse à balles selon une des revendications précédentes, **caractérisée en ce que** l'élément de masse (52) est conçu avec une régulation automatique.

5. Presse à balles selon une des revendications précédentes, **caractérisée en ce qu'**à l'élément de masse (52) est associé au moins un élément déformable élastiquement (62).

6. Presse à balles selon une des revendications précédentes, **caractérisée en ce qu'**à l'élément de masse (52) est associé au moins un dispositif de guidage (58, 60, 70) pour guider le déplacement de l'élément de masse (52).

7. Presse à balles selon une des revendications précédentes, **caractérisée en ce que** le au moins un accumulateur d'énergie (42) est conformé en volant d'inertie (44), lequel est monté en rotation autour d'un axe de rotation (50).

8. Presse à balles selon une des revendications précédentes, **caractérisée en ce que** l'élément de masse (52) est disposé, en particulier en partie, à l'intérieur ou sur une surface de l'accumulateur d'énergie (42).

9. Presse à balles selon une des revendications précédentes, **caractérisée en ce qu'**un dispositif de commande (48) est prévu pour déplacer, en particulier automatiquement, le au moins un élément de masse (52).
